# EUROPEAN PATENT SPECIFICATION

(11) **EP 3 198 354 B1**
(45) Date of publication and mention of the grant of the patent: **10.03.2021**
(21) Application number: 15767454.0
(22) Date of filing: 16.09.2015
(51) Int. Cl.: G05D 25/02, H05B 33/08, H05B 47/11, H05B 45/22, H05B 45/18, H05B 47/105, H05B 45/12

(54) **DEVICE AND METHOD ACHIEVING A BALANCE BETWEEN CONSERVATION AND EXHIBITION OF LIGHT-SENSITIVE OBJECTS**
VORRICHTUNG UND VERFAHREN ZUR ERZIELUNG EINES KOMPROMISSES ZWISCHEN KONSERVIERUNG UND AUSSTELLUNG VON LICHTEMPFINDLICHEN OBJEKTEN
DISPOSITIF ET PROCÉDÉ RÉALISANT UN COMPROMIS ENTRE LA CONSERVATION ET L'EXPOSITION D'OBJETS SENSIBLES À LA LUMIÈRE

(30) Priority: 24.09.2014 US 201462054457 P
(43) Date of publication of application: 02.08.2017
(73) Proprietor: Artratio, S.L., 03206 Elche (ES)
(72) Inventor: MUKUND PHATAK, Manoj, E-03206 Elche (ES)
(74) Representative: ZBM Patents - Zea, Barlocci & Markvardsen
(86) International application number: PCT/EP2015/071200
(87) International publication number: WO 2016/046042

(56) References cited:
- WO-A1-2012/080656
- WO-A1-2013/175348
- US-A1- 2007 188 873
- US-A1- 2014 278 178

## Description

This application claims the benefit of U.S. Provisional Patent Application Ser. No 62054457 filed on the 24th of September, 2014.

The present disclosure relates to light-sensitive materials and more specifically to techniques for controlling light levels incident on light-sensitive materials.

### BACKGROUND ART

The purpose of art conservation is to protect sensitive materials from damage. This often requires placing the art object in low ambient light levels or even permanent storage in complete darkness. Since the work of art cannot be viewed optimally, this approach can be detrimental to the market value of the object, since the artwork is not enjoying abundant exposure to the public and the author of the work may remain little-known.

On the other hand, when art is exhibited, the light impacting the art piece can cause irreversible damage, thus reducing the market value of the object. The International Commission on Illumination (CIE) in its technical report 157 from 2004 (referred to hereinafter as "CIE 157"), specifies internationally-agreed recommendations on maximum light exposure levels on art, based on different material categories. Current display systems (such as vertical display cases, display tables and wall-mountable display frames) do not provide optimal control mechanisms to limit the light damage on sensitive works of art and luxury products, despite the high value of these items. Current systems may incorporate sensors to measure temperature, light, humidity, air quality and other factors. More recent systems use electronically-switchable glass activated by proximity sensors to control the light that can impact these objects. However, there exists no product at this time that reduces the light incident on such objects as a function of the light sensitivity of the materials on the object. Such a product would allow customisation of each display system to the specific needs of each art object and would allow placement of sensitive works of art next to less sensitive ones within the same ambient light levels. It would also allow art collections housed in such display systems to be placed in abundant natural light and so allow public institutions to comply with World Green Building Council recommendations that demand increased usage of natural light to improve human well-being and health. Finally, such a product would increase the lifetime of priceless objects of cultural heritage and protect the investment made in works of art which form part of a diversified portfolio.

US2007/188873 discloses a display window for selectively passing illumination emanating from one or more artificial light source. The display window comprises a display material with a transparency that may be controlled to pass a substantially constant amount of the illumination from the one or more artificial light source and through the display material regardless of the amount of the illumination.

WO2013175348 describes a lighting system and a method for controlling lighting conditions in a room.

### SUMMARY

According to the proposed disclosure (also called the "system"), electronically-switchable glass, such as Suspended Particle Devices glass (hereinafter referred to as 'SPD glass'), is used to automatically regulate the light impacting an object as a function of the light-sensitivity of the materials present on the object. The terms "Smart glass" or "switchable glass" (also smart windows or switchable windows in some applications) refers to any transparent material such as glass or glazing whose light transmission properties are altered when voltage, light or heat is applied. For example, SPD smart glass changes from opaque to transparent when a voltage is applied, illuminating a material when transparent or protecting the material when in its opaque state.

The term "electronically-switchable glass" may refer to Suspended particle devices (SPDs), electrochromic devices, Polymer dispersed liquid crystal devices, micro-blinds, nanocrystals or the like, that may allow a change in optical properties, e.g. transmittance, scattering, reflectance or the like, as a function of an applied electrical signal.

The proposed system may, in some embodiments, collect sensorial data from the immediate environment of the art piece (such as temperature, humidity, light, security events and popularity), provide graphical visualisation in real-time of said data via a data network provided by the system and post these events to a data analytics server for historic business intelligence. The proposed system measures the light level falling inside the display system using a standard photodiode or by other suitable means or sensors. It is important to distinguish between radiometric terms, such as irradiance, which measure total energy (in Watts per square metre) delivered by an electromagnetic wave as opposed to photometric terms (such as lux) which account for the sensitivity of the human eye. In preferred embodiments, the proposed system also measures the time-integral of the irradiance, which evaluates to the light exposure, which is what causes irreversible damage to objects of moderate or high light sensitivity.

In a first aspect, a device is disclosed. The device is configured to house a light-sensitive material and to achieve equilibrium between conservation and exhibition of said material. Said material is illuminated by an external light source. The device comprises a power source; one or more electronically- switchable glass panels to cover one or more sides of the material, one or more artificial light sources, one or more light sensors to measure light levels incident on the material, and a controller. The controller is coupled to the power source, to the electronically switchable glass panels, to the one or more artificial light sources and to the one or more light sensors. The controller is configured to set a voltage of the one or more electronically switchable glass panels and a voltage of the one or more artificial light sources at least in response to the measured light levels and the sensitivity of the light-sensitive material. The voltages are set so that three conditions are met during a period of time. The first condition is that the light exposure incident on the material is maintained at a level lower than a maximum permitted level for the light-sensitivity of the material over the period of time, e.g. the CIE 157 maximum permitted level. The second is that the rate of increase of the light exposure is controlled to maintain said light exposure within the maximum permitted level over the remainder of said period of time. The third is that the light exposure is above a minimum acceptable level throughout said period of time, which allows visualisation of finer details and colours present on the material.

By meeting these three conditions a balance is met between proper exhibition of the light-sensitive material to observers and sufficient protection of the light-sensitive material from light.

In some examples, the system may request the user to select from a list of materials that appear on the object. This selection may be made on an intranet provided by the system. The user selection may allow the system to use a look-up table to decide which CIE 157 light-sensitivity categories the art work more closely corresponds to and hence to decide the maximum CIE recommended light exposure limit for the object. The system may measure light falling inside the display system and ambient light falling in the vicinity of the display system. Based on knowledge of these light levels and the material sensitivity, the system may adjust the transmittance of the SPD glass as well as the brightness and colour temperature of the artificial lighting to reduce light damage on the light-sensitive object.

The device further comprises a reflectance sensor to measure the reflectance of the material. This may ensure lighting levels on the light-sensitive object to provide adequate perception of the art piece in human photopic vision, which may allow finer details to be visualised by the human eye.

In some examples the device may further comprise a temperature sensor. The temperature sensor may be coupled to the controller. The controller may be configured to set the voltage of the one or more electronically switchable glass panels and the voltage of the one or more artificial light sources at least in response to a measurement of the temperature sensor. As lighting may contribute to a rise in the temperature of the material, thus accelerating damage to the material, by controlling the light it may also be possible to control the temperature.

In some examples, the device may further comprise a humidity sensor. The humidity sensor may be coupled to the controller. The controller may be configured to set the voltage of the one or more electronically switchable glass panels and the voltage of the one or more artificial light sources at least in response to a measurement of the humidity sensor. By controlling the lighting levels it may be possible to control humidity in the area of the light-sensitive material.

In some examples, the device may further comprise a proximity sensor. The proximity sensor may be coupled to the controller. The controller may be configured to set the voltage of the electronically switchable glass panel and the voltage of the one or more artificial light sources at least in response to a measurement of the proximity sensor. It may, therefore, allow more light to reach the material when a potential viewer of the object bearing the material is present in the vicinity of the object and less light otherwise. Thus, the material may be better protected because the light levels on the material may be lower when no one is in the vicinity of the material and higher otherwise.

In some examples, the controller may be configured to generate a popularity index in response to the measurements of the proximity sensor over a period of time. Therefore, information about the popularity of an object may be generated which may be used on one hand to plan a better protection strategy and on the other hand to better determine the market value of the object.

In some examples, the device may be a display case configured to host the light-sensitive material, said display case having one or more panels, each panel may comprise one or more electronically-switchable glasses. Depending on the angles an object may be viewed from, the display case may include a corresponding number of electronically-switchable glass panels. Thus, the object may be optimally visible from all potentially interesting perspectives. Such a configuration may be especially suitable for objects demonstrating different light-sensitivities from different perspectives.

In some examples the device may be a display table comprising an enclosed area having a top panel and/or side panels. Each panel may comprise one or more electronically-switchable glasses. The enclosed area may be configured to host the light-sensitive material. Such an arrangement may be suitable for objects such as books.

In some examples, the device may be a display frame, e.g. a wall-hangable display frame, configured to host the light-sensitive material and has one or more panels. Each panel may comprise one or more electronically switchable glasses. Such an arrangement may be suitable for largely two-dimensional objects such as paintings or fabrics.

In some examples, the device may further comprise a humidifier, to set the humidity in the device.

In another aspect, a method of illuminating a light-sensitive material on display is disclosed to achieve equilibrium between conservation and exhibition of said material. The method comprises:
- Identifying a maximum light exposure limit (P) of the light-sensitive material over a first period of time;
- Determining expected displayed hours (J) of the material over the first period of time;
- Determining a maximum permitted rate of increase in light exposure (G), where G=P/J;
- Identifying a reflectance (R) of the light-sensitive material;
- Measuring the incident light levels (B) on the light-sensitive material;
- Calculating light exposure X(t) of the light-sensitive material as a function of B;
- Calculating rate of increase (Q) of X(t);
- Measuring a first voltage (V1) across the electronically switchable glass panel;
- Identify transmittance (T) of the electronically switchable glass;
- calculating exitance (E) as a function of B, T and R;
- Identifying a desired exitance parameter (Esel);
- If the condition X(t)<P, Q<G and E>Esel is not met, then the method comprises:
   a. calculating Q-G and X(t)-P;
   b. measuring a second voltage V2 of the external light source;
   c. identifying luminance (F) of the artificial light source;
   d. adjusting V1 and V2 so that G*k<Q<G and E>Esel. The parameter k may be any number considered adequate to allow photopic vision. For example, k may be 0.9.

In some examples, the method may further comprise measuring an ambient light (A).

In some examples, identifying a maximum exposure limit (P) of the light-sensitive material over a first period of time, further comprises identifying a sensitivity of the material.

In some examples, the method further comprises identifying expected displayed hours per day (H) and days per year (D) for the light-sensitive object. The expected displayed hours J would then be equal to H*D.

In some examples, the method may further comprise setting the voltages V1 and V2 to a lower threshold when absence of viewers is detected. Therefore, the object may receive minimal light when no viewers are present.

In some examples, the method may further comprise adjusting the brightness and/or color of the artificial lighting source in response to the light sensors measurements to optimize light levels falling on the light-sensitive object. This may improve the photopic vision of the object.

In yet another aspect, a non-transitory computer readable medium is disclosed. The medium may include machine readable instructions that when executed by a computer perform a method of illuminating a light-sensitive material according to examples disclosed herein.

Additional objects, advantages and features of embodiments of the invention will become apparent to those skilled in the art upon examination of the description, or may be learned by practice of the invention.

### DESCRIPTION OF THE DRAWINGS

Particular embodiments of the present invention will be described in the following by way of non-limiting examples, with reference to the appended drawings, in which:
Figure 1 illustrates a display case according to an example.
Figure 2 illustrates a display table according to an example.
Figure 3 illustrates a display frame according to an example.
Figure 4 schematically illustrates a light model of a display system according to an example.
Figure 5 is a flow diagram of a method of illuminating a light-sensitive object according to an example.
Figure 6 is a block diagram of a device according to an example.

### DETAILED DESCRIPTION

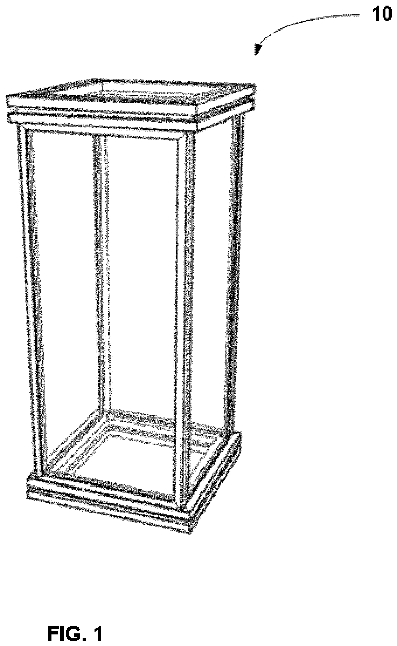

The proposed invention can be embodied in various form factors, such as vertical standing display cases using, for example, one or more panels of SPD glass (allowing 360° visibility on art works), display tables using at least 1 panel of SPD glass (suitable for low-height objects such as books and manuscripts) and wall-hangable display frames using at least 1 panel of SPD glass (for example suitable for maps and pictures). Figure 1 illustrates a display case according to an example. The display case 10 comprises four panels defining a rectangular frame, a top and a bottom panel. Each panel may host an SPD glass. Each glass may be individually switchable or all glasses may be uniformly switchable with the same parameters. One of the panels may be in the form of a hinged swinging door so that the case may be opened from one side to place or remove an object. The display case may also house a humidifier in the same housing of the object or placed at a lower compartment being in communication with the (upper) housing.

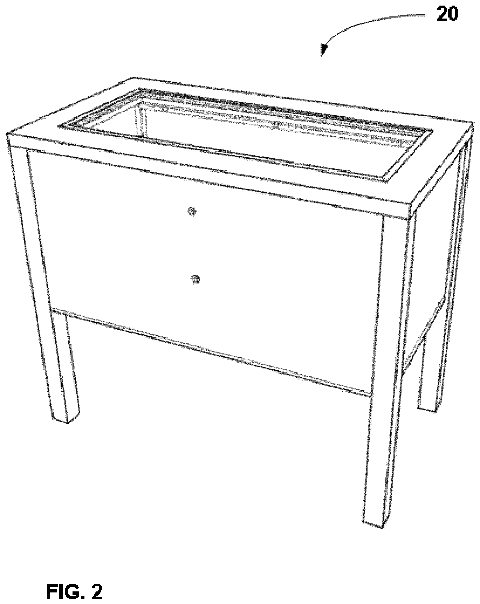

Figure 2 illustrates a display table according to an example. The display table 20 may define a container for housing the object to be displayed and may have a top panel hosting an SPD glass. The table may also house a humidifier in the same housing of the object or placed at a lower compartment being in communication with the (upper) housing.

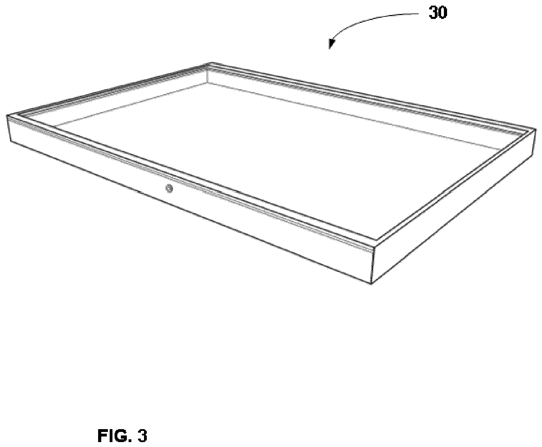

Figure 3 illustrates a display frame according to an example. The display frame 30 may comprise a frame, e.g. an aluminium frame, a sliding silent push drawer and a panel hosting a low reflectance SPD smart glass. A security lock may be used to seal the display frame. The display frame may also house a humidifier in the same housing of the object or placed at a lower compartment being in communication with the (upper) housing.

The quantities stipulated in CIE 157 are given in photometric terms (e.g. lumens per square metre or 'lux'), rather than radiometric terms (such as Watts / square metre), for the benefit of museum staff, who may not have access to more sophisticated measurement equipment. From CIE 157, it is known that CIE Type 4 highly sensitive materials such as silk, fugitive colourants and photographs have a maximum recommended exposure limit of 15,000 lux.hours per year, whereas moderately-sensitive materials (such as manuscripts, botanical specimens and watercolours) have a maximum exposure limit of 150,000 lux.hours per year. It is worth noting that applying 15,000 lux during 1 hour on a work of art is the same as applying 1 lux during 15,000 hours. Both equate to the same amount of energy (i.e. the same light exposure of 15,000 lux.hours).

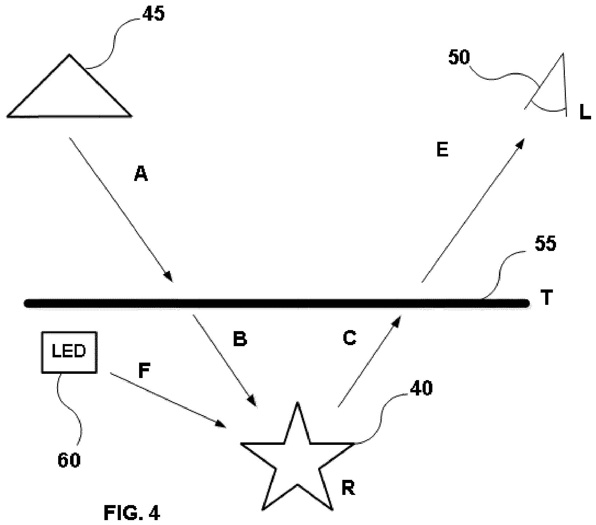

Fig. 4 shows a model of a generic display system housing a light-sensitive object 40 and illuminated by an external light source 45. In this example, light is shown reflected from the object; this appears to the observer 50 as a field-of-view dependent luminance, L. The display system glass 55 may change its transmittance (modelled as T) as a function of an applied electrical signal. The illuminance incident on the display system from the external light source is marked as A, of which T% is transmitted by the glass into the display system. This results in B lux entering the display system and illuminating the object. The artificial lighting 60 inside the display system (shown as LEDs) may also contribute to the illumination of the object as indicated with light quantity F. The light-sensitive object reflects a fraction R of the light as C lux, of which T% is transmitted by the glass and exits the display system as E lumens / m2. It is assumed that as long as E is above a certain minimum value, e.g. 10 lumens / m2, the observer 50 will receive a luminance L of 3 cd / m2 in the field of view, sufficient to allow photopic (i.e. colour) vision.

Tables 1 and 2 show an analysis of example light levels to illustrate how certain parameters can be modified by the system to define an equilibrium between conservation and exhibition of artworks based on the light-sensitivity of the object. Let's take the example of a CIE type 4 highly light-sensitive object (such as an antique Japanese silk kimono).

Table 1 shows a current-state standard display system look up table which may be stored on a database on a server or other computer hardware connected to the system where the objects are on display for J = 3000 hours per year and the glass transmits light during Y = 100% of that time at T = 95% transmittance. Y is called the Duty Cycle and assumes a standard non-switchable glass. A representative object reflectance R of 0.6 is assumed in this case. It can be seen that, in this case, observers would receive enough light, L (> 3 cd / m2) to be in photopic vision but that objects of type CIE category 4 would be exposed to light well above their maximum recommended exposure levels. In this case, the total exposure X on the art object would be 142,500 Lux hours / year, which is almost 10 times the recommended CIE limit of 15,000 Lux hours / year).

**Table 1**

| **CIE Category** | | **CIE 4** | **CIE 3** | **CIE 2** | **CIE 1** |
|---|---|---|---|---|---|
| Responsivity | | High | Moderate | Medium | None |
| Ambient Illuminance (lux) | A | 50 | 50 | 200 | No limit |
| CIE Exposure Limit (lux h / y) | P | 15000 | 150000 | 600000 | No limit |
| Max. Light Transmission of glass | T | 95% | 95% | 95% | 95% |
| Light transmitted into display case (lux) | B | 48 | 48 | 190 | |
| Displayed hours per year | J | 3000 | 3000 | 3000 | 3000 |
| % of display time transmitting light | Y | 100 | 100 | 100 | 100 |
| Hours displayed per year | S | 3000 | 3000 | 3000 | 3000 |
| Total Exposure (lux h / y) | X | 142500 | 142500 | 570000 | No limit |
| Is object within CIE exposure limits? | | NO | YES | YES | YES |
| Reflectance of object | R | 0.6 | 0.6 | 0.6 | 0.6 |
| Light reflected from object (lux) | C | 29 | 29 | 114 | |
| Exitance from display (Im/m2) | E | 27 | 27 | 108 | |
| Can users visualise object? (Luminance > 3cd/m2?) | L | YES | YES | YES | YES |

In the examples of Table 1, the illuminance (A) values correspond to recommended illuminance values as suggested in CIE 157. The recommended exposure limit (P) values are as suggested in CIE 157 based. The light (B) transmitted into the display case may be calculated as the product of the illuminance A times the transmission T%. If the object is also illuminated with an artificial light source (F) from within the display case then the value B must take into account also the contribution of such artificial illumination (F). The number of hours the object is on display (J) has been set to 3000, approximately corresponding to an exhibition of eight hours per day for seven days per week for fifty two weeks per year. It is also assumed that the glass is transmitting light during the entire time that the object is exhibited (i.e. 100% of the display time). Therefore, the actual hours (S) that light is illuminating the object 40 are equal to the hours the object is on display (J), multiplied by Y%, that is, S=J * Y%, where in this case Y is equal to 100. The total exposure (X) may be then calculated as the time-integral of the light transmitted into the display case. Assuming in this simple example that B is a constant value over time, then X = B * S. It may be derived from Table 1, that in the above scenario, the object with CIE 4 light sensitivity may be outside CIE 157 exposure limits. Now, for the example materials of Table 1, an example reflectance of 0.6 has been selected. The light (C) reflected from the object 40 may then be calculated as the product of the light (B) transmitted into the display case multiplied by the reflectance (R) of the object, i.e. C = B * R. Then, the exitance (E) may be calculated as the product of the reflected light (C) multiplied by the transmission of the glass (T). As for the luminance (L) in the field of view of the observer 50, any value of exitance E above 10 may imply luminance above 3 candelas per square meter which would imply that the viewers may visualise the object in human photopic vision. In the example of Table 1, the object with CIE 4 would achieve photopic observation during its exhibition time, but to the detriment of its material.

Table 2 now shows an example of a look-up table which may be stored on a database on a server or other computer hardware connected to the system which demonstrates one possible way of using an electronically-switchable display system with maximum transmittance T = 65% but where the Duty Cycle is reduced to 15%. This equates to 15% of 8 hours = 1.2 hours per day in which light is allowed to impact the art piece. This can be achieved in practice for example by switching off the display system during certain times of the day. With the parameters mentioned above, the invention would expose the object to 14,625 lux.hours per year, which is within the CIE 157 exposure limits for CIE Type 4 objects and yet this would also permit photopic observation of the object since the exitance E from the display system is greater than 10 lumens per square metre. It can be seen that the invention can be tailored to suit various material categories, various object popularities, various object reflectances, various ambient light levels, etc by varying either the time over which the object is exposed to light or the light levels to which the object is exposed.

**Table 2**

| **CIE Category** | | **CIE 4** | **CIE 3** | **CIE 2** | **CIE 1** |
|---|---|---|---|---|---|
| Responsivity | | High | Moderate | Medium | None |
| Ambient Illuminance (lux) | A | 50 | 50 | 200 | No limit |
| CIE Exposure Limit (lux h / y) | P | 15000 | 150000 | 600000 | No limit |
| Max. Light Transmission of glass | T | 65% | 65% | 65% | 65% |
| Light transmitted into display case (lux) | B | 33 | 33 | 130 | |
| Displayed hours per year | J | 3000 | 3000 | 3000 | 3000 |
| % of display time transmitting light | Y | 15 | 50 | 50 | 50 |
| Hours displayed per year | S | 450 | 1500 | 1500 | 1500 |
| Total Exposure (lux h / y) | X | 14625 | 48750 | 195000 | No limit |
| Is object within CIE exposure limits? | | YES | YES | YES | YES |
| Reflectance of object | R | 0.6 | 0.6 | 0.6 | 0.6 |
| Light reflected from object (lux) | C | 20 | 20 | 78 | |
| Exitance from display (Im/m2) | E | 13 | 13 | 51 | |
| Can users visualise object? (Luminance > 3cd/m2?) | L | YES | YES | YES | YES |

A further addition to the above proposed system may include using standard roof-top light collectors (with sun tracking) to channel natural light through fibre-optic pipes into a surface of the display system, thus replacing the artificial lighting mentioned above. SPD glass can then be used on the underside of the top interior surface to regulate how much natural light can enter the display system via the fibre-optic pipes. Any momentary changes in light levels (e.g. the passing of a cloud above the building) will then be channeled into the display system, allowing a greater connection between the exterior building environment and the immediate environment of the art work. This improved connection between the interior and exterior building environment is recommended by the World Green Building Council as it can increase human productivity, health and well-being and allows the building to achieve a higher sustainability rating. The proposed system may furthermore allow works of art to be viewed in the same natural light conditions (e.g. colour temperature) as was used when the work was authored.

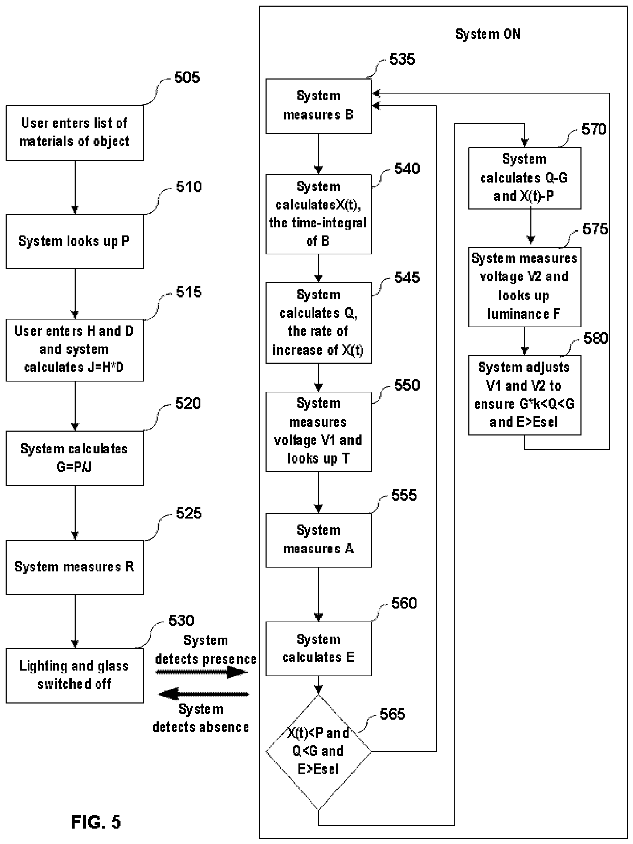

Figure 5 is a flow diagram of a method of illuminating a light-sensitive object according to an example. In a first step 505, a user may enter a list of materials of an object. Then in step 510, the system may look up a CIE maximum exposure limit (P) for the materials present on the object. In case the object has multiple materials the system may select the material with the lowest P value. In step 515, the user may enter expected hours per day (H) and days per year (D) that the object is expected to be viewed. The system may then calculate the expected displayed hours per year (J=H*D). In step 520, the system may calculate a maximum permitted rate of increase in light exposure (G=P/J). In step 525, the system may measure reflected light (R) by firing short bursts of light at the object. Then the system may switch off glass and interior lighting, in step 530, and leave the object in low ambient light or even in darkness. When the system detects a presence of a viewer/observer then it may measure irradiance (B) incident on the object in step 535. The system may then, in step 540, calculate a time-integral X(t) of B which may correspond to the light exposure of the object. In step 545 the system may calculate a rate of increase (Q) in X(t). Then, in step 550, the system may measure a voltage V1 across the smart glass and look up the transmittance T of the glass. In step 555 the system may measure the ambient light level (A). In step 560 the system may calculate Exitance (E) from irradiance B, the transmittance T and the reflected light R. In decision box 565, the system may check if X(t)<P, Q<G and E>Esel. Esel may be an exitance value, e.g. 10, that allows for photopic vision. If the conditions are met, then the system may continue in step 535. Otherwise, in step 570, the system may calculate Q-G and X(t)-P. Then the system, in step 575, may measure a voltage V2 across the artificial lighting and may look up luminance F. In step 580, the system may adjust V1 and V2 to ensure that G*k<Q<G and E>Esel.

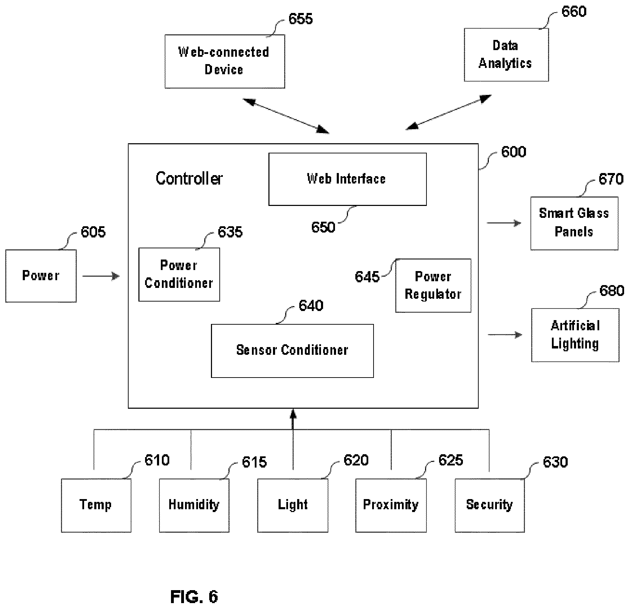

Fig. 6 shows a high-level functional model of the system as described in various embodiments herein. In this example, the system 600 accepts power input from power module 605, which may be regulated with power conditioner 635 to remove spikes, dips and other irregularities from the standard mains electrical voltage. The system may also accept sensor inputs which need to be conditioned with sensor conditioner 640 to remove noise, for example. Example sensors may include, but are not limited to, temperature 610, humidity 615, proximity 620, light levels 625 and security 630 sensors but may also include air quality, colour temperature or other sensors or modules providing variables of interest to the conservation of works of art. The system may in some embodiments provide a processing interface or server such as a web interface 650 to serve pages of real-time information in graphical format to any device 655 capable of connecting to the internet and rendering HTML or other suitable format for display. The system may also contain a web client or mobile application ("app") to post event updates, such as changes to the temperature, humidity and light as well as proximity events from a proximity sensor. Such event updates may be posted to an external data analytics module 660, in which each event is time-stamped to allow historical searches of temperature / humidity fluctuations over days, weeks, months or longer periods of time. The system may thus also offer historical searching of any of the above parameters to allow fine-tuned control over incursions above or below user-defined limits on any of the above variables. The system may also measure the time elapsed during a person's presence in front of the display system and offer this information as an index of popularity. Such a popularity index can be of great use to retailers of art and luxury objects to gauge the interest shown in the object. Finally, the system may control the voltage delivered to the smart glass 670 and to artificial lighting 680 with a power regulator 645 as a function of the above sensorial parameters as well as using knowledge of the light-sensitivity of the art piece, e.g. object 40, as described above for example by comparing measurement details received by the light sensor 620 with a look-up table and determining proper current to send to the smart glass panels 670.

The photodetector such as a photodiode within the proposed system converts photons of light into electrical current. If operated in the reverse-biased mode (where the photodiode anode is connected to a negative voltage), the current increases linearly with incident irradiance. When the photodiode is connected to a standard signal-conditioning circuit arrangement such as a transimpedance amplifier, the photodiode output current is converted into an output voltage which can be converted by an analog-to-digital converter (ADC) into a digital number. This digital number corresponds to the irradiance falling on the photodiode. If the photodiode is placed in close proximity to the work of art, the system can determine the irradiance (for example as Watts per square meter) incident on the art object. Taking the time-integral (using a standard op-amp-based resistor-capacitor circuit) of the irradiance gives us the light exposure, or incident energy in Joules / square meter.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A device configured to house a material and to achieve equilibrium between conservation and exhibition of said material, said material having a light sensitivity and illuminated by a light source, the device comprising:
a power source (605);
one or more electronically switchable glass panels (670) to cover one or more sides of the material from incident light;
one or more artificial light sources (680);
one or more light sensors (625) to measure light levels incident on the material;
a reflectance sensor to measure the reflectance of the material and
a controller (600), coupled to the power source (605), to the electronically switchable glass panels (670), to the one or more artificial light sources (680), to the one or more light sensors (625) and to the reflectance sensor,
wherein
the controller (600) is configured to set a first voltage of the one or more electronically switchable glass panels (670) and a second voltage of the one or more artificial light sources (680) at least in response to the measured light levels and the sensitivity of the light-sensitive material, such that
the light exposure incident on the material over a period of time is maintained at a level lower than a maximum permitted level for the light-sensitivity of the material over the period of time,
a rate of increase of the light exposure is controlled to maintain said light exposure within the maximum permitted level throughout said period of time, and
the light exposure is above a minimum acceptable level throughout said period of time to allow a user to view the material in photopic vision.

2. The device according to claim 1, further comprising a temperature sensor (610), coupled to the controller (600), wherein the controller (600) is configured to set the voltage of the one or more electronically switchable glass panels (670) and the voltage of the one or more artificial light sources at least in response to a measurement of the temperature sensor (610).

3. The device according to any of the above claims, further comprising a humidity sensor (615), coupled to the controller (600), wherein the controller (600) is configured to set the voltage of the one or more electronically switchable glass panels (670) and the voltage of the one or more artificial light sources at least in response to a measurement of the humidity sensor (615).

4. The device according to any of the above claims, further comprising a proximity sensor (620), coupled to the controller (600), wherein the controller (600) is configured to set the voltage of the electronically switchable glass panel (670) and the voltage of the one or more artificial light sources at least in response to a measurement of the proximity sensor (620), wherein the controller (600) is configured to generate a popularity index in response to the measurements of the proximity sensor (620) over a period of time

5. The device according to any of claims 1 to 4, wherein the device is a display case (10) having one or more panels, the display case is configured to host the light-sensitive material and comprises one or more electronically-switchable glasses.

6. The device according to any of claims 1 to 4, wherein the device is a display table (20) comprising an enclosed area having a top panel and/or side panels, each comprising one or more electronically-switchable glasses, whereby the enclosed area is configured to host the light-sensitive material.

7. The device according to any of claims 1 to 4, wherein the device is a display frame (30) configured to host the light-sensitive material and has one or more panels each panel comprising one or more electronically switchable glasses.

8. The device according to any of claims 5 to 7, further comprising a humidifier, to set the humidity in the device.

9. The device according to any of the above claims, wherein the light source comprises an artificial light source and a natural light source, wherein the controller adjusts the voltage of the artificial light source.

10. A method of illuminating a light-sensitive material on display in a device according to claims 1 to 9, to achieve equilibrium between conservation and exhibition of said material, the method comprising:
identifying a maximum light exposure limit (P) of the light-sensitive material over a first period of time;
determining expected displayed hours (J) of the material over the first period of time;
determining a maximum permitted rate of increase in light exposure (G), where G=P/J
identifying a reflectance (R) of the light-sensitive material;
measuring the incident light levels (B) on the light-sensitive material;
calculating light exposure X(t) of the light-sensitive material as a function of B;
calculating rate of increase (Q) of X(t);
measuring a first voltage (V1) across the electronically switchable glass panel (670);
identify transmittance (T) of the electronically switchable glass (670);
calculating exitance (E) as a function of B, T and R;
identifying a desired exitance parameter (Esel);
if the condition X(t)<P, Q<G and E>Esel is not met, then the method comprises:
calculating Q-G and X(t)-P;
measuring a second voltage V2 of the artificial light sources (680);
identifying luminance (F) of the artificial light sources (680);
adjusting V1 and V2 so that G*k<Q<G and E>Esel, wherein k is a number to allow photopic vision.

11. The method according to claim 10, further comprising measuring an ambient light (A);

12. The method according to any of claims 10 to 11, wherein identifying a maximum exposure limit (P) of the light-sensitive material over a first period of time, further comprises identifying a sensitivity of the material;

13. The method according to any of claims 10 to 12, further comprising:
identifying expected displayed hours per day (H) and days per year (D) for the light-sensitive object, wherein J=H*D.

14. A method according to any of claims 10 to 13, further comprising setting the voltages V1 and V2 to a lower threshold when absence of viewers is detected.

15. A method according to any of claims 10 to 14, further comprising adjusting the brightness and/or color of the artificial lighting source in response to the light sensors measurements to optimize light levels of the light-sensitive object.

## Patentansprüche

1. Eine Vorrichtung, die konfiguriert ist, um ein Material aufzunehmen und ein Gleichgewicht zwischen Konservierung und Ausstellung des Materials zu erreichen, wobei das Material eine Lichtempfindlichkeit hat und von einer Lichtquelle beleuchtet wird, wobei die Vorrichtung folgendes umfasst:
eine Stromquelle (605);
eine oder mehrere elektronisch schaltbare Glasscheiben (670), um eine oder mehrere Seiten des Materials gegen einfallendes Licht abzuschirmen;
eine oder mehrere künstliche Lichtquellen (680);
einen oder mehrere Lichtsensoren (625) zum Messen von auf das Material einfallenden Lichtmengen;
einen Reflexionssensor zum Messen des Reflexionsvermögens des Materials und
eine Steuereinheit (600), die mit der Stromquelle (695), den elektronisch schaltbaren Glasscheiben (670), der einen oder den mehreren künstlichen Lichtquellen (680), dem einen oder den mehreren Lichtsensoren (625) und dem Reflexionssensor verbunden ist;
wobei
die Steuereinheit (600) konfiguriert ist, um eine erste Spannung der einen oder der mehreren elektronisch schaltbaren Glasscheiben (670) und eine zweite Spannung der einen oder der mehreren künstlichen Lichtquellen (680) zumindest als Reaktion auf die gemessenen Lichtmengen und die Empfindlichkeit des lichtempfindlichen Materials so einzustellen, dass
die auf das Material einfallende Belichtung über einen Zeitraum auf einem Niveau gehalten wird, das unter einem maximal zulässigen Niveau der Lichtempfindlichkeit des Materials über den Zeitraum liegt,
eine Zuwachsrate der Belichtung gesteuert wird, um die Belichtung über den gesamten Zeitraum innerhalb des maximal zulässigen Niveaus zu halten, und
die Belichtung über den gesamten Zeitraum über einem akzeptablen Mindestniveau liegt, um zu ermöglichen, dass ein Benutzer das Material in photopischer Ansicht sehen kann.

2. Die Vorrichtung nach Anspruch 1, weiterhin umfassend einen Temperatursensor (610), der mit der Steuereinheit (600) gekoppelt ist, wobei die Steuereinheit (600) konfiguriert ist, um die Spannung der einen oder der mehreren elektronisch schaltbaren Glasscheiben (670) und die Spannung der einen oder der mehreren künstlichen Lichtquellen zumindest als Reaktion auf eine Messung durch den Temperatursensor (610) einzustellen.

3. Die Vorrichtung nach einem der obigen Ansprüche, weiterhin umfassend einen Feuchtigkeitssensor (615), der mit der Steuereinheit (600) gekoppelt ist, wobei die Steuereinheit (600) konfiguriert ist, um die Spannung der einen oder der mehreren elektronisch schaltbaren Glasscheiben (670) und die Spannung der einen oder der mehreren künstlichen Lichtquellen zumindest als Reaktion auf eine Messung durch den Feuchtigkeitssensor (615) einzustellen.

4. Die Vorrichtung nach einem der obigen Ansprüche, weiterhin umfassend einen Näherungssensor (620), der mit der Steuereinheit (600) gekoppelt ist, wobei die Steuereinheit (600) konfiguriert ist, um die Spannung der elektronisch schaltbaren Glasscheibe (670) und die Spannung der einen oder der mehreren künstlichen Lichtquellen mindestens als Reaktion auf eine Messung durch den Näherungssensor (620) einzustellen, wobei die Steuereinheit (600) konfiguriert ist, um einen Beliebtheitsindex als Reaktion auf die Messungen durch den Näherungssensor (620) über einen Zeitraum zu erzeugen.

5. Die Vorrichtung nach einem der Ansprüche 1 bis 4, wobei die Vorrichtung eine Vitrine (10) mit einer oder mehreren Scheiben ist, wobei die Vitrine konfiguriert ist, um das lichtempfindliche Material aufzunehmen, und ein oder mehrere elektronisch schaltbare Gläser umfasst.

6. Die Vorrichtung nach einem der Ansprüche 1 bis 4, wobei die Vorrichtung ein Anzeigetisch (20) ist, der einen geschlossenen Bereich mit einer oberen Scheibe und/oder Seitenscheiben umfasst, die jeweils ein oder mehrere elektronisch schaltbare Gläser umfassen, wobei der geschlossene Bereich zum Aufnehmen des lichtempfindlichen Materials konfiguriert ist.

7. Die Vorrichtung nach einem der Ansprüche 1 bis 4, wobei die Vorrichtung ein Anzeigerahmen (30) ist, der konfiguriert ist, um das lichtempfindliche Material aufzunehmen, und eine oder mehrere Platten hat, wobei jede Platte ein oder mehrere elektronisch schaltbare Gläser umfasst.

8. Die Vorrichtung nach einem der Ansprüche 5 bis 7, weiterhin umfassend einen Luftbefeuchter, um die Feuchtigkeit in der Vorrichtung einzustellen.

9. Die Vorrichtung nach einem der obigen Ansprüche, wobei die Lichtquelle eine künstliche Lichtquelle und eine natürliche Lichtquelle umfasst, wobei die Steuereinheit die Spannung der künstlichen Lichtquelle einstellt.

10. Ein Verfahren zum Beleuchten eines lichtempfindlichen Materials, das in einer Vorrichtung nach den Ansprüchen 1 bis 9 angezeigt wird, um ein Gleichgewicht zwischen Konservierung und Ausstellung des Materials zu erreichen, wobei das Verfahren folgendes umfasst:
Identifizieren von einer maximalen Belichtungsgrenze (P) des lichtempfindlichen Materials über einen ersten Zeitraum;
Bestimmen der erwarteten angezeigten Stunden (J) des Materials über den ersten Zeitraum;
Bestimmen einer maximal zulässigen Zuwachsrate der Belichtung (G), wobei G=P/J.
Identifizieren eines Reflexionsvermögens (R) des lichtempfindlichen Materials;
Messen der auf das lichtempfindliche Material einfallenden Lichtmenge (B);
Berechnen der Belichtung X(t) des lichtempfindlichen Materials als Funktion von B;
Berechnen der Zuwachsrate (Q) von X(t);
Messen von einer ersten Spannung (V1) quer durch die elektronisch schaltbare Glasscheibe (670);
Identifizieren der Durchlässigkeit (T) des elektronisch schaltbaren Glases (670);
Berechnen der Ausstrahlung (E) als Funktion von B, T und R;
Identifizieren eines gewünschten Ausstrahlungsparameters (Esel);
wenn die Bedingung X(t)<P, Q<G und E>Esel nicht erfüllt ist, dann umfasst das Verfahren:
Berechnen von Q-C und X(t)-P;
Messen von einer zweiten Spannung V2 der künstlichen Lichtquellen (680);
Identifizieren der Leuchtdichte (F) der künstlichen Lichtquellen (680);
Einstellen von V1 und V2, sodass G*k<Q<G und E>Esel erfüllt ist, wobei k eine Anzahl ist, bei der die photopische Ansicht ermöglicht wird.

11. Das Verfahren nach Anspruch 10, weiterhin umfassend das Messen eines Umgebungslichts (A).

12. Das Verfahren nach einem der Ansprüche 10 bis 11, wobei das Identifizieren von einer maximalen Belichtungsgrenze (P) des lichtempfindlichen Materials über einen ersten Zeitraum weiterhin das Identifizieren von einer Empfindlichkeit des Materials umfasst.

13. Das Verfahren nach einem der Ansprüche 10 bis 12, weiterhin umfassend:
Identifizieren der erwarteten angezeigten Stunden pro Tag (H) und Tage pro Jahr (D) für das lichtempfindliche Objekt, wobei J=H*D.

14. Ein Verfahren nach einem der Ansprüche 10 bis 13, weiterhin umfassend das Einstellen der Spannungen V1 und V2 auf einen niedrigeren Schwellenwert, wenn keine Zuschauer erfasst werden.

15. Ein Verfahren nach einem der Ansprüche 10 bis 14, weiterhin umfassend das Einstellen der Helligkeit und/oder der Farbe der künstlichen Lichtquelle als Reaktion auf die Messungen durch die Lichtsensoren, um Lichtmengen des lichtempfindlichen Objekts zu optimieren.

## Revendications

1. Un dispositif configuré pour loger un matériau et pour atteindre l'équilibre entre la conservation et l'exposition dudit matériau, ledit matériau ayant une sensibilité à la lumière et étant éclairé par une source de lumière, le dispositif comprenant :
une source d'alimentation (605) ;
un ou plusieurs panneaux en verre commutables électroniquement (670) pour couvrir un ou plusieurs côtés du matériau par rapport à la lumière incidente ;
une ou plusieurs sources de lumière artificielle(s) (680) ;
un ou plusieurs capteurs de lumière (625) pour mesurer les niveaux de lumière incidente sur le matériau ;
un capteur de réflectance pour mesurer la réflectance du matériau et
un contrôleur (600), couplé à la source d'alimentation (605), aux panneaux en verre commutables électroniquement (670), à l'une ou aux plusieurs sources de lumière artificielle (680), à l'un ou aux plusieurs capteurs de lumière (625) et au capteur de réflectance,
où
le contrôleur (600) est configuré pour fixer une première tension de l'un ou des plusieurs panneaux en verre commutables électroniquement (670) et une seconde tension de l'une ou des plusieurs sources de lumière artificielle (680) au moins en réponse aux niveaux de lumière mesurés et à la sensibilité du matériau sensible à la lumière, de telle sorte que
l'exposition à la lumière incidente sur le matériau pendant une période de temps est maintenue à un niveau inférieur à un niveau maximal admissible pour la sensibilité à la lumière du matériau sur la période de temps,
la vitesse d'augmentation de l'exposition à la lumière est commandée pour maintenir ladite exposition à la lumière dans le niveau maximal admissible pendant toute ladite période de temps, et
l'exposition à la lumière est supérieure à un niveau minimal acceptable pendant toute ladite période de temps afin de permettre à un utilisateur de voir le matériau en vision photopique.

2. Le dispositif selon la revendication 1, comprenant en outre un capteur de température (610), couplé au contrôleur (600), dans lequel le contrôleur (600) est configuré pour fixer la tension de l'un ou des plusieurs panneaux en verre commutables électroniquement (670) et la tension de l'une ou des plusieurs sources de lumière artificielle au moins en réponse à une mesure du capteur de température (610).

3. Le dispositif selon l'une quelconque des revendications ci-dessus, comprenant en outre un capteur d'humidité (615), couplé au contrôleur (600), dans lequel le contrôleur (600) est configuré pour fixer la tension de l'un ou des plusieurs panneaux en verre commutables électroniquement (670) et la tension de l'une ou des plusieurs sources de lumière artificielle au moins en réponse à une mesure du capteur d'humidité (615).

4. Le dispositif selon l'une quelconque des revendications ci-dessus, comprenant en outre un capteur de proximité (620), couplé au contrôleur (600), dans lequel le contrôleur (600) est configuré pour fixer la tension du panneau en verre commutable électroniquement (670) et la tension de l'une ou des plusieurs sources de lumière artificielle au moins en réponse à une mesure du capteur de proximité (620), dans lequel le contrôleur (600) est configuré pour générer un indice de popularité en réponse aux mesures du capteur de proximité (620) sur une période de temps.

5. Le dispositif selon l'une quelconque des revendications 1 à 4, dans lequel le dispositif est une vitrine (10) ayant un ou plusieurs panneaux, la vitrine est configurée pour loger le matériau sensible à la lumière et comprend un ou plusieurs verres commutables électroniquement.

6. Le dispositif selon l'une quelconque des revendications 1 à 4, dans lequel le dispositif est une table d'affichage (20) comprenant une zone fermée ayant un panneau supérieur et/ou des panneaux latéraux, chacun comprenant un ou plusieurs verres commutables électroniquement, dans lequel la zone fermée est configurée pour loger le matériau sensible à la lumière.

7. Le dispositif selon l'une quelconque des revendications 1 à 4, dans lequel le dispositif est un cadre d'affichage (30) configuré pour loger le matériau sensible à la lumière et a un ou plusieurs panneaux, chaque panneau comprenant un ou plusieurs verres commutables électroniquement.

8. Le dispositif selon l'une quelconque des revendications 5 à 7, comprenant en outre un humidificateur, pour fixer l'humidité dans le dispositif.

9. Le dispositif selon l'une quelconque des revendications ci-dessus, dans lequel la source de lumière comprend une source de lumière artificielle et une source de lumière naturelle, dans lequel le contrôleur ajuste la tension de la source de lumière artificielle.

10. Un procédé d'éclairage d'un matériau sensible à la lumière présenté dans un dispositif selon les revendications 1 à 9, pour atteindre l'équilibre entre la conservation et l'exposition dudit matériau, le procédé comprenant :
identifier une limite maximale d'exposition à la lumière (P) du matériau sensible à la lumière sur une première période de temps ;
déterminer les heures d'affichage attendues (J) du matériau sur la première période de temps ;
déterminer un taux d'augmentation maximal admissible d'exposition à la lumière (G), où G = P / J
identifier une réflectance (R) du matériau sensible à la lumière ;
mesurer les niveaux de lumière incidente (B) sur le matériau sensible à la lumière ;
calculer l'exposition à la lumière X(t) du matériau sensible à la lumière en fonction de B ;
calculer le taux d'augmentation (Q) de X(t) ;
mesurer une première tension (V1) à travers le panneau en verre commutable électroniquement (670) ;
identifier la transmittance (T) du verre commutable électroniquement (670) ;
calculer l'exitance (E) en fonction de B, T et R ;
identifier un paramètre d'exitance désiré (Esel);
si la condition X(t)<P, Q<G et E>Esel n'est pas satisfaite, alors le procédé comprend :
calculer Q-C et X(t)-P ;
mesurer une seconde tension V2 des sources de lumière artificielle (680) ;
identifier la luminance (F) des sources de lumière artificielle (680) ;
ajuster V1 et V2 de sorte que G*k<Q<G et E>Esel, où k est un nombre permettant la vision photopique.

11. Le procédé selon la revendication 10, comprenant en outre mesurer une lumière ambiante (A).

12. Le procédé selon l'une quelconque des revendications 10 à 11, dans lequel identifier une limite d'exposition maximale (P) du matériau sensible à la lumière sur une première période de temps, comprend en outre identifier une sensibilité du matériau.

13. Le procédé selon l'une quelconque des revendications 10 à 12, comprenant en outre :
identifier des heures affichées attendues par jour (H) et des jours par an (D) pour l'objet sensible à la lumière, où J=H*D.

14. Un procédé selon l'une quelconque des revendications 10 à 13, comprenant en outre fixer les tensions V1 et V2 à un seuil inférieur lorsqu'une absence d'observateurs est détectée.

15. Un procédé selon l'une quelconque des revendications 10 à 14, comprenant en outre ajuster la luminosité et/ou la couleur de la source d'éclairage artificiel en réponse aux mesures des capteurs de lumière afin d'optimiser les niveaux de lumière de l'objet sensible à la lumière.
